# EUROPÄISCHE PATENTSCHRIFT

(11) **EP 3 049 689 B1**
(45) Veröffentlichungstag und Bekanntmachung des Hinweises auf die Patenterteilung: **03.10.2018**
(21) Anmeldenummer: 14753231.1
(22) Anmeldetag: 13.08.2014
(51) Int. Cl.: F16D 65/12

(54) **SCHIENENRAD MIT RADBREMSSCHEIBE**
RAIL WHEEL WITH WHEEL-MOUNTED BRAKE DISK
ROUE DE VÉHICULE SUR RAIL AVEC DISQUE DE FREIN DE ROUE

(30) Priorität: 24.09.2013 AT 506152013
(43) Veröffentlichungstag der Anmeldung: 03.08.2016
(73) Patentinhaber: Siemens AG Österreich, 1210 Wien (AT)
(72) Erfinder: WEBER, Franz-Josef, A-8054 Graz (AT); ZENZ, Rüdiger, A-8020 Graz (AT)
(74) Vertreter: Maier, Daniel Oliver
(86) Internationale Anmeldenummer: PCT/EP2014/067319
(87) Internationale Veröffentlichungsnummer: WO 2015/043818

(56) Entgegenhaltungen:
- EP-A1- 0 062 774
- WO-A1-2010/108671
- DE-U1-202009 014 768

## Beschreibung

### Technisches Gebiet

Die Erfindung betrifft ein Schienenrad mit Radbremsscheibe, welche durch eine Vielzahl von über den Radumfang verteilten Befestigungselementen am Radkörper des Schienenrads befestigt ist und in diesem Befestigungsbereich am Radkörper anliegt. So ein Schienenrad ist z.B. aus EP-A-0 062 774 bekannt.

Dabei kann lediglich eine Radbremsscheibe auf einer Seite des Rades vorgesehen sein, oder es können zwei Radbremsscheiben vorgesehen sein, auf jeder Seite des Rades eine. Denkbar sind auch mehrere konzentrische Radbremsscheiben auf einer oder auf beiden Seiten des Rades.

Das Rad ist bei Schienenfahrzeugen meist als Vollrad, nämlich als Scheibenrad, ausgebildet. Bei diesen umfasst der Radkörper den Radsteg und die Radnabe. Die Erfindung ist aber nicht auf Vollräder beschränkt.

### Stand der Technik

In Schienenfahrzeugen kommen in der Regel mehrere Bremssysteme zur Anwendung, eine Bremssteuerung koordiniert das Zusammenspiel aller Bremssysteme. Das wichtigste Bremssystem ist dabei die Reibungsbremse. Diese wandelt die kinetische Energie eines Schienenfahrzeugs über zwei Reibpartner in Wärme um. Die Reibpartner bei Hochgeschwindigkeitszügen sind Bremsscheiben aus Stahl und Bremsbeläge aus Sintermetall.

Die Bremsscheiben können dabei als Radbremsscheiben ausgeführt werden. Das Bremsmoment wird von der Radbremsscheibe über eine kraftschlüssige Verbindung, meist eine Schraubverbindung, auf das Rad übertragen. Bei einem Bremsvorgang wird eine sehr hohe Leistung in die Radbremsscheibe eingebracht und diese dadurch thermisch verformt. Die thermische Verformung führt zu hoher Beanspruchung der Befestigungselemente, was gegebenenfalls ein starkes Setzen der Schraubverbindung bewirkt und bis zum Verlust der Schraubenvorspannkraft führen kann. Das Lösen der Schraubverbindung ist die Folge.

Bisher wurde dieses Problem dadurch gelöst, dass die Radbremsscheibe mit ihren Kühlrippen zur Gänze am Radkörper, genauer dem Radsteg, anliegt und die Schraubverbindung wurde so ausgelegt, dass trotz der Setzung die verbleibende Schraubenvorspannkraft ausreicht, um das Bremsmoment zu übertragen. Derartige Anordnungen sind aus der Beschreibungseinleitung der DE 10 2008 003 923 A1 bekannt, die selbst wiederum ein Schienenrad offenbart, wo im Anlagebereich zwischen Radbremsscheibe und Radkörper eine Zwischenlage vorgesehen ist.

Eine andere Möglichkeit, um ausreichend Schraubenvorspannung zu gewährleisten, ist, die Radbremsscheibe zur Übertragung des Bremsmoments zusätzlich formschlüssig mit dem Rad zu verbinden, wodurch die Schraubverbindungen nicht so hoch belastet werden.

### Darstellung der Erfindung

Es ist eine Aufgabe der vorliegenden Erfindung, ein Schienenrad mit Radbremsscheibe zur Verfügung zu stellen, mit welchem die Belastung der Befestigungselemente nach Beginn des Bremsens reduziert werden kann, also etwa die Schraubverbindung entlastet werden kann.

Diese Aufgabe wird durch ein Schienenrad mit den Merkmalen des Patentanspruchs 1 gelöst. Vorteilhafte Ausgestaltungen der Erfindung sind in den jeweiligen abhängigen Ansprüchen definiert.

Die Radbremsscheibe liegt im kalten Zustand radial außerhalb des Befestigungsbereichs in zumindest einem radialen Bereich am Radkörper an und weist im Bereich radial innerhalb des Befestigungsbereichs einen Abstand zum Radkörper auf, also nicht am Radkörper anliegt.

Die Radbremsscheibe liegt im kalten Zustand radial außerhalb des Befestigungsbereichs in zumindest einem radialen Bereich direkt am Radkörper an, dass also keine Zwischenschicht, etwa aus einem anderen Material, vorgesehen ist. Es könnte aber natürlich auch eine Zwischenschicht vorgesehen werden.

Der Begriff "kalter Zustand" beschreibt die Tatsache, dass die Radbremsscheibe Umgebungstemperatur aufweist, also etwa 0 bis 30°C, also nicht durch das Bremsen erhitzt und thermisch verformt ist. Wenn das erfindungsgemäße Schienenrad sich also im kalten, thermisch nicht verformten Zustand befindet, dann liegt die Radbremsscheibe im Befestigungsbereich und außerhalb dieses Befestigungsbereichs auch in einem weiteren Bereich, der in der Regel vom Befestigungsbereich beabstandet ist, am Radkörper an. Die Radbremsscheibe liegt aber innerhalb des Befestigungsbereichs in keinem Bereich am Radkörper an. In diesem inneren Bereich ist die Radbremsscheibe also freigestellt.

Diese Freistellung kann einerseits dadurch entstehen, dass die Radbremsscheibe an der Innenseite (an der dem Schienenrad zugewandten Seite) radial innerhalb des Befestigungsbereichs dünner ist als radial außerhalb des Befestigungsbereichs. Dies wird etwa dadurch erreicht, dass bei der Herstellung der Bremsscheibe an deren Innenseite innerhalb des Befestigungsbereichs - in axialer Richtung gesehen - mehr Material weggenommen wird als außerhalb des Befestigungsbereichs. Die Radbremsscheibe weist also an ihrer Innenseite, und zwar radial innerhalb des Befestigungsbereichs, einen Absatz bzw. einen Rücksprung (vom Schienenrad weg) auf. Das Schienenrad selbst (in der Regel der Radsteg) kann im Bereich des Rücksprungs dagegen plan ausgeführt sein. Diese Ausführungsvariante ermöglicht das Montieren der Radbremsscheiben mit Absatz an herkömmliche plane Schienenräder und ermöglicht so das Nachrüsten von bestehenden Schienenrädern mit erfindungsgemäßen Radbremsscheiben.

Erfindungsgemäß wird die Freistellung der Radbremsscheibe so hergestellt, dass das Schienenrad an der der Radbremsscheibe zugewandten Seite radial innerhalb des Befestigungsbereichs einen Rücksprung (Absatz) aufweist. Die dem Schienenrad zugewandte Seite der Radbremsscheibe ist dann in diesem Bereich plan, während das Schienenrad (der an dieser Stelle befindliche Radsteg) einen Absatz hat.

Es wäre auch denkbar, dass sowohl das Schienenrad (nämlich in der Regel der Radsteg) als auch die Radbremsscheibe an den einander zugewandten Seiten radial innerhalb des Befestigungsbereichs einen Rücksprung aufweisen.

Erst nach Beginn einer Bremsung, wenn sich die Radbremsscheibe erhitzt und verformt, wird sich die Radbremsscheibe bei allen Ausführungsvarianten auch in einem oder mehreren radialen Bereichen innerhalb des Befestigungsbereichs am Radkörper anlegen.

Beim Bremsen erhitzt sich die Radbremsscheibe typischer Weise, je nach Material und Bremsdauer, auf Temperaturen von 400 bis 800°C.

Der - in axialer Richtung gemessene - Abstand zwischen Radbremsscheibe und Radkörper im Bereich radial innerhalb des Befestigungsbereichs beträgt zum Erreichen des erfindungsgemäßen Effekts zumindest 1 mm, vorzugsweise 2 mm, insbesondere zwischen 3 und 4 mm. Dieser Abstand liegt deutlich außerhalb von Fertigungsungenauigkeiten, die in der Regel im Bereich bis zu 0,5 mm liegen. Dieser Abstand ist über den gesamten Umfang gleich.

Falls die Radbremsscheibe Kühlrippen aufweist, so kann vorgesehen sein, dass sie mit den Kühlrippen radial außerhalb des Befestigungsbereichs am Radkörper anliegt, und - erst bei thermischer Verformung - auch im Bereich innerhalb des Befestigungsbereichs.

Kühlrippen entstehen durch längliche Vertiefungen in der Radbremsscheibe, die in Tiefenrichtung zum Radkörper gerichtet sind, also auf der Seite des Radkörpers über die übrige Ebene der Radbremsscheibe hinausragen. In Längsrichtung verlaufen die Kühlrippen meist radial.

Es kann vorgesehen sein, etwa aus konstruktiven Gründen oder aus Gründen der Kühlleistung, dass der zumindest eine radiale Bereich außerhalb des Befestigungsbereichs, wo die Radbremsscheibe am Radkörper anliegt, in radialer Richtung vom Befestigungsbereich beabstandet ist. Genauso könnte aber die Radbremsscheibe auch - gleich anschließend an den ohnehin am Radkörper anliegenden Befestigungsbereich - gleich radial außerhalb des Befestigungsbereichs am Radkörper anliegen.

Im einfachsten Fall ist die Radbremsscheibe einteilig ringförmig ausgebildet, sie könnte jedoch auch aus mehreren Ringsegmenten zusammengesetzt sein.

In der Regel werden die Befestigungselemente Schrauben sein, die etwa entlang eines Kreises mit Zentrum in der Radachse angeordnet sind, was den Vorteil hat, dass die Verbindung gelöst werden kann. Dies wäre auch der Fall, wenn die Radbremsscheibe mittels Federn und Bolzen an das Rad fixiert wird. Grundsätzlich könnte die Radbremsscheibe jedoch auch am Rad angenietet oder angeschmiedet werden.

Mit der vorliegenden Erfindung ist es möglich, unter Verwendung der bisherigen Schraubverbindung die Sicherheit derselben zu erhöhen.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Fig. 1 einen Ausschnitt einer erfindungsgemäßen Radbremsscheibe,
Fig. 2 einen Längsschnitt durch ein erfindungsgemäßes Rad mit einer innen freigestellten Radbremsscheibe,
Fig. 3 einen Längsschnitt durch ein Rad mit einer innen und außen freigestellten Radbremsssheibe, und
Fig. 4 einen Längsschnitt durch ein Rad mit einer Radbremsssheibe ohne Freistellung.

### Ausführung der Erfindung

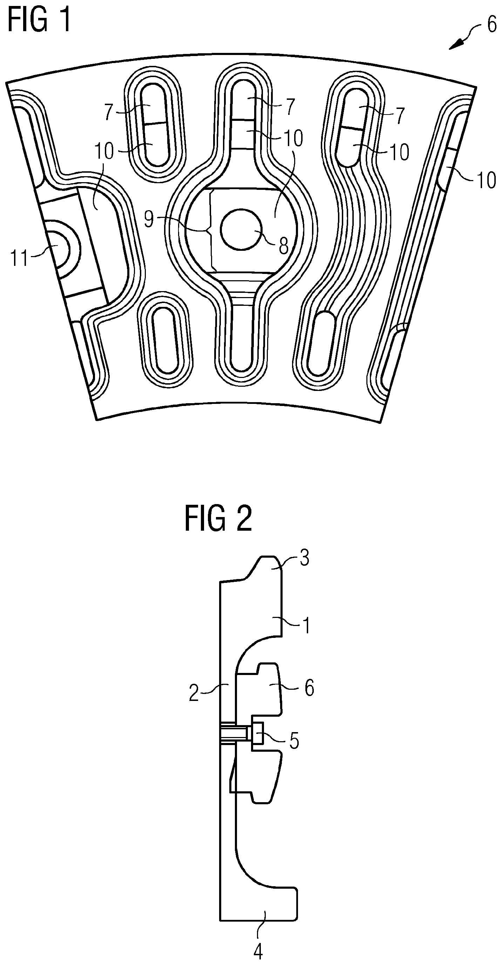

Die Fig. 2 bis 4 zeigen jeweils die obere Hälfte eines Rades eines Schienenfahrzeugs, mit dem Radkranz 1, dem Spurkranz 3 am Radkranz und den Radsteg 2, der den Radkranz 1 mit der Radnabe 4 verbindet. Radsteg 2 und Radnabe 4 bilden den Radkörper. Mittels Schrauben 5 ist die ringförmige Radbremsscheibe 6, die um die Radnabe 4 herumläuft, am Radsteg 2 befestigt.

In Fig. 1 ist ein Ausschnitt der Radbremsscheibe 6 dargestellt, das heißt, der Ausschnitt setzt sich links und rechts kreisringförmig fort. Es sind unterschiedliche Kühlrippen 7 erkennbar, in welchen die Kontaktbereiche mit dem Radsteg 2 dunkel als Kontaktbereiche 10 eingezeichnet sind. Lediglich das Befestigungsloch 8, in das die Schraube 5 eingesetzt wird, ist als Durchbruch ausgeführt. Zwischen den Befestigungslöchern sind hier Führungselemente 11 vorgesehen, die mit entsprechenden Gegenstücken am Radsteg 2 zusammenwirken und eine radiale Führung der Radbremsscheibe 6 im Falle der erwärmungsbedingten Ausdehnung gewährleisten.

Der kreisringförmige Bereich, in dem alle Befestigungslöcher 8 liegen und der ebenfalls dunkel eingezeichnet ist, stellt den Befestigungsbereich 9 dar, wo die Radbremsscheibe jedenfalls am Radsteg 2 aufliegt. In Fig. 1 ist darüber ein weiterer kreisringförmiger Kontaktbereich 10 eingezeichnet, der einen radialen Abstand zum Befestigungsbereich 9 aufweist: dies ist ein weiterer Kontaktbereich, wo die Radbremsscheibe 6 mit ihren Kühlrippen 7 direkt am Radsteg 2 anliegt. Im Bereich radial innerhalb des Befestigungsbereichs 9, also in Fig. 1 unterhalb des Befestigungsbereichs 9, berühren die Kühlrippen 7 den Radsteg 2 nicht, wenn die Radbremsscheibe kalt und nicht thermisch deformiert ist.

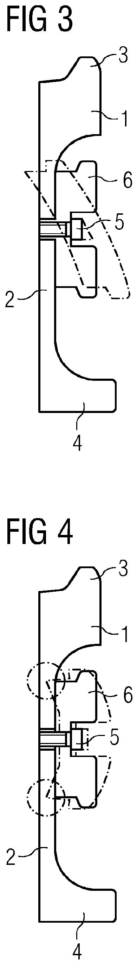

In Fig. 3, die einen Längsschnitt durch ein Rad mit einer innen und außen freigestellten Radbremsssheibe 6 zeigt, ist diese sowohl im kalten Zustand als auch im thermisch verformten Zustand dargestellt. Der außerhalb des Befestigungsbereichs 9 (hier oberhalb der Schraube 5 dargestellt) befindliche Teil der Radbremsscheibe 6 wölbt sich zum Radsteg 2 hin, während der innerhalb des Befestigungsbereichs 9 angeordnete Teil (hier unterhalb der Schraube 5 dargestellt) sich vom Radsteg 2 weg bewegt. Der verformte Zustand ist stark überzeichnet, die Bemaßungspfeile zeigen jedoch, dass in diesem Beispiel der äußere Umfang der Radbremsscheibe 6 um ein relativ großes Maß zum Radsteg 2 wandert, während der innere Umfang um ein ähnlich großes Maß vom Radsteg 2 wegwandert. Dies stellt eine große Belastung für die Schraube 5 dar.

In Fig. 4, die einen Längsschnitt durch ein Rad mit einer Radbremsscheibe ohne Freistellung zeigt, ist diese ebenfalls sowohl im kalten Zustand als auch im thermisch verformten Zustand dargestellt. Im kalten und Neuzustand liegt die Radbremsscheibe 6 also sowohl im Befestigungsbereich um die Schrauben 5, als auch außerhalb und innerhalb davon, am Radsteg 2 an. Der thermisch verformte Zustand ist auch hier stark überzeichnet, aber es ist erkennbar, dass sich die freien Enden, also der innere und der äußere Umfang der Radbremsscheibe 6, nicht zum Radsteg 2 hin verformen können, weil sie an diesem bereits im kalten Zustand anliegen. Deshalb hebt sich die Radbremsscheibe 6 im Befestigungsbereich 9 rund um die Schrauben 5, also in Fig. 4 direkt oberhalb und unterhalb der Schraube 5, vom Radsteg 2 ab, was die Schraubenverbindung belastet. Die Radbremsscheibe 6 (genauer gesagt, die vorher mit dem Radsteg 2 in Kontakt gewesenen Bereiche) befindet sich in diesem Beispiel dann im Bereich, der radial außerhalb der Schraube 5 anschließt, in einem axialen Abstand vom Radsteg 2, der etwa einem Viertel des Abstands in Fig. 3 entspricht, und im Bereich, der radial innerhalb der Schraube 5 anschließt, in einem axialen Abstand vom Radsteg 2, der ebenfalls etwa einem Viertel des Abstands in Fig. 3 entspricht.

Gemäß der erfindungsgemäßen Lösung in Fig. 2 ist die Radbremssscheibe 6 im kalten Zustand nur innen freigestellt, das heißt, sie liegt im Befestigungsbereich 9 um die Schrauben 5 und zumindest teilweise im Bereich außerhalb der Schrauben 5 bzw. des Befestigungsbereichs 9 am Radsteg an, während sie mit ihrem freien Ende, dem inneren Umfang, einen axialen Abstand von beispielsweise mindestens 1 mm zum Radsteg 2 aufweist. Beim Erwärmen der Radbremsscheibe 6 kann sich diese nun mit ihrem freien Ende zum Radsteg 2 bewegen, was in diesem Beispiel einer Änderung des Abstands um etwa ein Viertel des Maßes aus Fig. 3 gleichkommt, während sich die Radbremsscheibe 6 im Bereich direkt radial außerhalb der Schrauben 5 lediglich um etwa ein Siebentel des Maßes aus Fig. 3 vom Radsteg 2 abhebt. Im Bereich direkt radial innerhalb der Schrauben 5 bleibt der Kontakt zwischen Radbremsscheibe 6 und Radsteg 2 erhalten. Diese Ausführungsvariante übt somit die geringste Belastung auf die Schraube 5 aus.

Die Radbremscheibe hat hier beispielsweise eine Dicke von etwa 25 mm.

Versuche zeigen, dass mit der vorliegenden Erfindung - der Freistellung des inneren Bereichs der Radbremsscheibe 6 bzw. der inneren Kühlrippen 7 - die Schraubverbindung nicht so stark ausgenützt wird bzw. kann die Radbremsscheibe 6 im Vergleich zu der gezeigten herkömmlichen Lösung bei gleicher Sicherheit eine höhere Bremsleistung aufnehmen.

Es wird die Sicherheit dieses sicherheitsrelevanten Bauteils erhöht und die Beanspruchung der Schraubverbindung verringert. Es könnte auch bei gleicher Sicherheit eine kostengünstigere Schraubverbindung verwendet werden.

### Bezugszeichenliste:

- 1: Radkranz
- 2: Radsteg (Teil des Radkörpers)
- 3: Spurkranz
- 4: Radnabe (Teil des Radkörpers)
- 5: Schraube (Befestigungselement)
- 6: Radbremsscheibe
- 7: Kühlrippe
- 8: Befestigungsloch
- 9: Befestigungsbereich
- 10: Kontaktbereich
- 11: Führungselement

## Patentansprüche

1. Schienenrad mit Radbremsscheibe (6), welche durch eine Vielzahl von über den Radumfang verteilten Befestigungselementen (5) am Radkörper (2) des Schienenrads befestigt ist und in diesem Befestigungsbereich (9) am Radkörper anliegt, wobei die Radbremsscheibe (6) im kalten Zustand radial außerhalb des Befestigungsbereichs (9) in zumindest einem radialen Bereich am Radkörper anliegt und im Bereich radial innerhalb des Befestigungsbereichs (9) einen Abstand zum Radkörper aufweist, **dadurch gekennzeichnet dass** das Schienenrad an der der Radbremsscheibe (6) zugewandten Seite radial innerhalb des Befestigungsbereichs (9) einen Rücksprung aufweist.

2. Schienenrad mit Radbremsscheibe nach Anspruch 1, **dadurch gekennzeichnet, dass** die Radbremsscheibe (6) an der dem Schienenrad zugewandten Seite radial innerhalb des Befestigungsbereichs (9) einen Rücksprung aufweist.

3. Schienenrad mit Radbremsscheibe nach einem der Ansprüche 1 bis 2, **dadurch gekennzeichnet, dass** der Abstand zwischen Radbremsscheibe (6) und Radkörper (2) zumindest 1 mm, vorzugsweise 2 mm, insbesondere zwischen 3 und 4 mm, beträgt.

4. Schienenrad mit Radbremsscheibe nach einem der Ansprüche 1 bis 3, **dadurch gekennzeichnet, dass** die Radbremsscheibe (6) Kühlrippen (7) aufweist und gegebenenfalls mit den Kühlrippen radial außerhalb des Befestigungsbereichs (9) am Radkörper (2) anliegt.

5. Schienenrad mit Radbremsscheibe nach einem der Ansprüche 1 bis 4, **dadurch gekennzeichnet, dass** der zumindest eine radiale Bereich außerhalb des Befestigungsbereichs (9), wo die Radbremsscheibe (6) am Radkörper (2) anliegt, in radialer Richtung vom Befestigungsbereich (9) beabstandet ist.

6. Schienenrad mit Radbremsscheibe nach einem der Ansprüche 1 bis 5, **dadurch gekennzeichnet, dass** die Radbremsscheibe (6) einteilig ringförmig ausgebildet ist.

## Claims

1. Rail wheel with wheel-mounted brake disk (6), which is fastened to the wheel body (2) of the rail wheel by a plurality of fastening elements (5) distributed over the wheel circumference and is seated against the wheel body in this fastening region (9), wherein the wheel-mounted brake disk (6) is seated against the wheel body in the cold state radially outside the fastening region (9) in at least one radial region and in the region radially within the fastening region (9) is spaced apart from the wheel body, **characterised in that** the rail wheel has a rebound on the side facing the wheel-mounted brake disk (6) radially within the fastening region (9).

2. Rail wheel with wheel-mounted brake disk according to claim 1, **characterised in that** the wheel-mounted brake disk (6) has a rebound on the side facing the rail wheel radially within the fastening region (9).

3. Rail wheel with wheel-mounted brake disk according to one of claims 1 to 2, **characterised in that** the spacing between wheel-mounted brake disk (6) and wheel body (2) is at least 1 mm, preferably 2 mm, in particular between 3 and 4 mm.

4. Rail wheel with wheel-mounted brake disk according to one of claims 1 to 3, **characterised in that** the wheel-mounted brake disk (6) has cooling fins (7) and where applicable is seated against the wheel body (2) with the cooling fins radially outside the fastening region (9).

5. Rail wheel with wheel-mounted brake disk according to one of claims 1 to 4, **characterised in that** the at least one radial region outside the fastening region (9), where the wheel-mounted brake disk (6) is seated against the wheel body (2), is spaced apart from the fastening region (9) in the radial direction.

6. Rail wheel with wheel-mounted brake disk according to one of claims 1 to 5, **characterised in that** the wheel-mounted brake disk (6) is designed to be integral and annular.

## Revendications

1. Roue de véhicule sur rails avec disque de frein de roue (6), qui est fixée par le biais d'une pluralité d'éléments de fixation (5) répartis sur la périphérie de roue au niveau du corps de roue (2) de la roue de véhicule sur rails et contiguë au corps de roue dans cette zone de fixation (9), dans laquelle le disque de frein de roue (6) se trouve à l'état froid dans le sens radial à l'extérieur de la zone de fixation (9) dans au moins une zone radiale au niveau du corps de roue et présente une distance par rapport au corps de roue dans la zone dans le sens radial à l'intérieur de la zone de fixation (9), **caractérisée en ce que** la roue de véhicule sur rails présente un retrait au niveau du côté orienté vers le disque de frein de roue (6) dans le sens radial à l'intérieur de la zone de fixation (9).

2. Roue de véhicule sur rails avec disque de frein de roue selon la revendication 1, **caractérisée en ce que** le disque de frein de roue (6) présente un retrait au niveau du côté orienté vers la roue de véhicule sur rails dans le sens radial à l'intérieur de la zone de fixation (9).

3. Roue de véhicule sur rails avec disque de frein de roue selon l'une des revendications 1 à 2, **caractérisée en ce que** la distance entre le disque de frein de roue (6) et le corps de roue (2) représente au moins 1 mm, de préférence 2 mm, en particulier entre 3 et 4 mm.

4. Roue de véhicule sur rails avec disque de frein de roue selon l'une des revendications 1 à 3, **caractérisée en ce que** le disque de frein de roue (6) présente des ailettes de refroidissement (7) et le cas échéant est contigu aux ailettes de refroidissement dans le sens radial à l'extérieur de la zone de fixation (9) au niveau du corps de roue (2).

5. Roue de véhicule sur rails avec disque de frein de roue selon l'une des revendications 1 à 4, **caractérisée en ce que** l'au moins une zone radiale à l'extérieur de la zone de fixation (9), où le disque de frein de roue (6) est contigu au corps de roue (2), est espacée de la zone de fixation (9) dans la direction radiale.

6. Roue de véhicule sur rails avec disque de frein de roue selon l'une des revendications 1 à 5, **caractérisée en ce que** le disque de frein de roue (6) est réalisé en forme d'anneau d'un seul tenant.
